# FASCICULE DE BREVET EUROPEEN

(11) **EP 1 425 210 B1**
(45) Date de publication et mention de la délivrance du brevet: **25.05.2011**
(21) Numéro de dépôt: 02770031.9
(22) Date de dépôt: 16.07.2002
(51) Int. Cl.: B62K 25/28

(54) **VEHICULE DEUX ROUES A SUSPENSION ARRIERE**
ZWEIRAD MIT HINTERRADAUFHÄNGUNG
TWO-WHEELER WITH REAR SUSPENSION

(30) Priorité: 26.07.2001 FR 0110016
(43) Date de publication de la demande: 09.06.2004
(73) Titulaire: DECATHLON, 59650 Villeneuve d'Ascq (FR)
(72) Inventeur: ASSIER, Denis, F-12170 Saint Jean Delnous (FR)
(74) Mandataire: Hennion, Jean-Claude
(86) Numéro de dépôt international: PCT/FR2002/002534
(87) Numéro de publication internationale: WO 2003/010042

(56) Documents cités:
- EP-A- 0 941 917
- EP-A- 1 026 073
- WO-A-98/56645
- DE-A- 19 802 429
- FR-A- 2 776 981
- FR-A- 2 803 576
- US-A- 6 099 010
- US-B1- 6 203 042

## Description

La présente invention concerne un véhicule du type à deux roues, notamment une bicyclette ou plus particulièrement un vélo tout- terrain désigné couramment VTT, équipé d'une suspension arrière. Document EP-A- 0 941 917 décrit un véhicule à deux roues selon le préambule de la revendication 1.

Un vélo tout-terrain, dit VTT, peut comporter de manière conventionnelle deux suspensions, une suspension avant et une suspension arrière. La suspension avant consiste généralement dans une fourche télescopique. Quant à la suspension arrière elle comporte un ensemble oscillant et un système amortisseur. L'ensemble oscillant qui supporte la roue arrière est relié au châssis avant du VTT par une ou plusieurs liaisons de pivotement. Le système amortisseur a pour fonction de réaliser la suspension élastique du châssis du VTT, supportant l'utilisateur, tout en assurant l'amortissement des chocs consécutifs au débattement de la roue arrière. La ou les liaisons pivotantes ont pour fonction de guider le mouvement de débattement de ladite roue arrière du fait des irrégularités du terrain.

Dans un premier type de suspension arrière, le boîtier du pédalier fait partie intégrante de l'ensemble oscillant de sorte que la suspension n'a aucune influence directe sur la transmission. En effet quel que soit le débattement de la roue arrière, la distance entre le boîtier de pédalier et l'axe de ladite roue reste constante.

Dans un second type de suspension arrière, le boîtier de pédalier est partie intégrante du châssis de sorte que la suspension influe sur la transmission. En effet lors du débattement de la roue arrière, on constate une variation de la distance entre le boîtier de pédalier et l'axe de la roue arrière.

Cette interaction entre la suspension et la transmission peut provoquer ce que l'on appelle couramment l'effet de pompage qui se traduit par un déplacement indésirable du châssis, qui s'enfonce et se soulève, sous l'effet d'un pédalage énergique.

On a déjà proposé, par exemple dans le document FR.A.2.774.966, un vélo tout-terrain à suspension arrière à deux liaisons de pivotement et dans lequel le boîtier de pédalier fait partie intégrante du châssis avant. Dans ce document la suspension arrière est composée d'une première et d'une seconde biellettes rigides, reliant chacune le bras oscillant portant la roue arrière au châssis avant, et d'un système amortisseur.

Chacune de ces biellettes est de préférence réalisée en alliage léger forgé ou usiné, sous la forme de deux chapes reliées dos à dos, formant un H. La traverse reliant les branches du H doit être fortement entretoisée pour résister convenablement aux efforts de vrillage sans se déformer. On trouve également deux pièces du même type, analogues aux bielles du document FR.A.2.774.966 dans le document US.5.259.637 sous les références 60 et 62 et dans le document FR 2.776.981 sous les références 7 et 8.

Dans ces exemples de suspensions arrière connues, les biellettes ou analogues doivent assurer non seulement la fonction de pivotement entre l'ensemble oscillant et le châssis avant mais également la rigidité du VTT.

Il est par ailleurs noté que le mode de réalisation du document US.5.259.637 est particulièrement complexe, mettant en oeuvre un très grand nombre de pièces reliant les deux biellettes indirectement au système amortisseur formé par un ressort de compression.

La présente invention concerne un véhicule à deux roues, notamment bicyclette ou encore VTT, équipé d'une suspension arrière, ledit véhicule comportant un châssis avant portant un boîtier de pédalier et un ensemble arrière oscillant, portant une roue arrière motrice ; ledit châssis et ledit ensemble arrière sont solidaires l'un de l'autre par deux liaisons pivotantes et par un système amortisseur. De manière caractéristique selon l'invention, la première liaison pivotante est formée par un excentrique circulaire constitué dans un boîtier portant un axe excentré, ledit boîtier étant monté pivotant dans un logement sur le châssis avant, tandis que l'ensemble arrière est fixé par une liaison à pivot sur l'axe excentré de part et d'autre du boîtier ; de plus la seconde liaison pivotante est formée par une bielle constituée par une simple plaque disposée dans le plan médian du châssis on parallèlement à celui-ci.

Certes, on a déjà proposé dans le document EP 941.917 la mise en oeuvre d'un excentrique circulaire constitué dans un boîtier portant un axe excentré, mais dans ce document, le boîtier est monté dans un logement sur le châssis arrière et c'est le boîtier de pédalier qui est monté sur l'axe excentré. De plus, dans ce cas, la seconde liaison pivotante est formée par un système à came.

On entend par direction générale du châssis la direction de déplacement du véhicule lorsque la roue avant est dans l'exact prolongement du châssis. Il s'agit donc d'une direction qui correspond au plan médian du châssis ou qui est parallèle à celui-ci.

Ainsi la rigidité de la suspension arrière est apportée par l'excentrique circulaire tandis que c'est la plaque formant bielle qui assure la cinématique de ladite suspension.

Les deux fonctions de rigidité et de cinématique sont donc en grande partie dissociées dans le véhicule de l'invention.

De préférence l'excentrique circulaire présente une excentricité d1 de l'ordre de 15 à 20 mm. Comparativement la longueur d2 de la bielle entre ses deux pivots est de l'ordre de 80 à 150 mm.

Avantageusement l'excentrique circulaire est logé, dans le châssis avant, à proximité, notamment au-dessus et en arrière, du boîtier de pédalier.

De préférence, la partie du châssis avant qui est destinée à accueillir le boîtier de pédalier et l'excentrique circulaire est une pièce de jonction réalisée d'une seule pièce usinée, la pièce brute étant obtenue par forgeage, moulage ou extrusion. Ce mode de réalisation présente plusieurs avantages : coût de réalisation faible, précision du positionnement de l'excentrique circulaire et du boîtier de pédalier, meilleure rigidité de l'ensemble. Lorsque le châssis avant a une structure traditionnelle, cette pièce de jonction est assemblée avec le tube de selle et avec le tube diagonal.

Le système amortisseur est fixé d'une part à l'ensemble arrière oscillant et d'autre part au châssis. Il combine les fonctions d'amortissement et de suspension. Il peut s'agir d'un système à ressort, à air, à huile. Par simplification, dans la suite du présent texte, il sera désigné sous le terme général de vérin. Le corps du vérin est fixé au châssis et l'extrémité de la tige du vérin est fixée à l'ensemble arrière oscillant. Le système amortisseur a une direction d'action, qui correspond à l'axe longitudinal du corps et de la tige dudit vérin. De préférence la direction d'action du système amortisseur fait un angle α faible avec la portion du châssis sur laquelle ledit système est fixé, α étant avantageusement inférieur à 30° et plutôt de l'ordre de 20°. Cette disposition particulière a pour effet de diminuer considérablement les contraintes et la déformation du châssis avant. En particulier elle permet de fixer le système amortisseur sur le tube supérieur du cadre, s'agissant d'un châssis traditionnel comportant un tube supérieur, sensiblement horizontal, un tube de selle et un tube diagonal inférieur. Dans ce cas, l'angle α correspond à l'angle formé par la direction générale du tube supérieur et par l'axe du système amortisseur; lorsque cet angle α est inférieur à 30°, il n'est pas nécessaire de conférer une rigidité supplémentaire au tube supérieur du cadre. Certes lors du débattement angulaire de la suspension et donc lors de la compression du système amortisseur, l'angle α est amené à varier, mais cette variation reste dans la limite imposée ci-dessus, qui est d'être de l'ordre de ou inférieure à 30°.

Dans une variante préférée de réalisation, le système amortisseur, l'ensemble arrière oscillant et la plaque formant bielle sont solidarisés les uns aux autres par un même axe de pivotement. On a donc ainsi une fixation commune pour la bielle et pour le système amortisseur avec l'ensemble arrière oscillant, ce qui réduit le nombre de pivots à réaliser et le nombre d'assemblages et ce qui procure également un gain de poids appréciable.

Dans un mode de réalisation préféré, la direction d'action du système amortisseur est sensiblement dans le prolongement d'une portion rectiligne de l'ensemble arrière oscillant dont une première extrémité est fixée audit système amortisseur et dont la seconde extrémité porte la roue arrière. Cette disposition particulière assure une transmission optimale des efforts venant de la roue arrière sur le système amortisseur.

L'ensemble arrière oscillant a, de préférence, une configuration sensiblement triangulaire formée par une tige de base entre l'axe excentré du boîtier excentrique et la roue arrière, un hauban entre la roue arrière et le pivot de la bielle et une tige de renfort entre le pivot de la bielle et l'axe excentré de l'excentrique. On obtient une rigidité accrue du fait de la fermeture du triangle. Dans cette configuration, comme vu ci-dessus, de préférence le système amortisseur a sa direction d'action qui est sensiblement dans le prolongement du hauban.

La présente invention sera mieux comprise à la lecture de la description qui va être faite d'un exemple préféré de réalisation d'un vélo tout-terrain dit VTT, à suspension arrière triangulaire, illustré par le dessin annexé dans lequel :
- la figure 1 est une vue partielle du VTT, à savoir le châssis avant et l'ensemble arrière oscillant,
- la figure 2 est une représentation schématique du VTT de la figure 1 dans son état statique non chargé,
- la figure 3 est une représentation schématique du VTT de la figure 1 dans son état statique chargé,
- la figure 4 est une représentation schématique du VTT de la figure 1 dans son état de débattement maximal, et
- la figure 5 est une vue partielle, en coupe au niveau de l'excentrique circulaire, de la pièce monobloc de jonction.

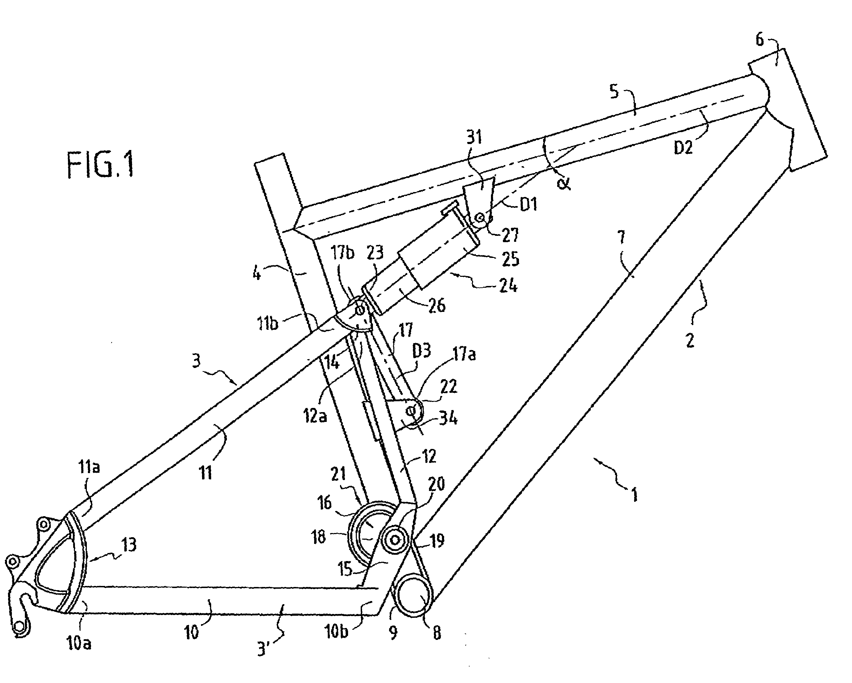

Le VTT 1 à suspension arrière qui est partiellement représenté à la figure 1 comprend un châssis avant 2, de structure relativement conventionnelle, et un ensemble arrière oscillant 3.

Le châssis avant 2 est constitué de quatre tubes, respectivement le tube de selle 4, le tube supérieur 5, le tube de direction 6 et le tube diagonal 7. Le boîtier de pédalier 8 est monté dans un logement 9 formé à l'extrémité inférieure du tube de selle 4, à l'intersection dudit tube de selle 4 avec le tube diagonal 7.

L'ensemble arrière oscillant 3 supporte la roue arrière motrice, non représentée. Il est constitué de deux sous-ensembles 3' dont l'un est visible sur la figure 1, disposés de part et d'autre du plan médian du châssis avant 2 et reliés l'un à l'autre, notamment au niveau des deux liaisons pivotantes comme cela sera expliqué ci-après.

Chaque sous-ensemble 3' a une configuration globalement triangulaire, avec un tube de base 10, un hauban 11 et un tube de renfort 12. Les parties arrière respectivement 10a et 11a du tube de base 10 et du hauban 11 sont terminées par une pièce de raccordement 13 qui sert au montage de la roue arrière.

La partie avant 11b du hauban 11 et la partie haute 12a de la tige de renfort 12 sont raccordées par une pièce 14, faisant office de sommet du triangle matérialisé par les trois tubes 10, 11, 12.

La partie avant 10b du tube de base et la partie basse 12b du tube de renfort sont raccordées par une pièce 15 qui, dans l'exemple représenté, ne constitue pas l'un des sommets du triangle, mais constituerait plutôt un petit côté d'un quadrilatère dont les trois autres côtés seraient formés par les trois tubes 10, 11, 12. Bien sûr ce mode de réalisation n'est pas exclusif, la pièce 15 pouvant être une pièce de raccordement analogue à la pièce 14 entre le hauban 11 et le tube de renfort 12.

L'ensemble arrière 3 est relié au châssis avant 2 par deux liaisons pivotantes et par un système amortisseur. De manière caractéristique, la première liaison pivotante est constituée par un excentrique circulaire 16 et la seconde liaison pivotante est constituée par une bielle 17 formée par une simple plaque disposée dans le plan médian du châssis avant 2 ou parallèlement à celui-ci

Plus précisément l'excentrique circulaire 16 comprend un boîtier, mobile en rotation autour d'un axe 28 perpendiculaire au plan médian du châssis 2, et portant un axe excentré 19. Cet axe excentré 19, porté par le boîtier 18, dépasse de part et d'autre du châssis 2 et est rendu solidaire de l'ensemble arrière 3 par une liaison à pivot 20.

Dans l'exemple illustré, l'excentrique circulaire 16 est monté dans un logement 21 pratiqué dans le tube de selle 4 à proximité du logement 9 dans lequel se trouve placé le boîtier de pédalier 8. De préférence les logements respectivement 21 de l'excentrique circulaire 16 et 9 du boîtier de pédalier 8 sont intégrés dans une pièce monobloc de jonction 30 usinés en une seule pièce brute, obtenue par forgeage, moulage ou extrusion.

Cette pièce monobloc de jonction 30 est assemblée par mécano soudure au tube de selle 4 et au tube diagonal 7.

La liaison par pivot 2 de l'axe excentré 19 sur l'ensemble arrière 3 est réalisé au niveau de la pièce 15 entre le tube de base 10 et le tube de renfort 12.

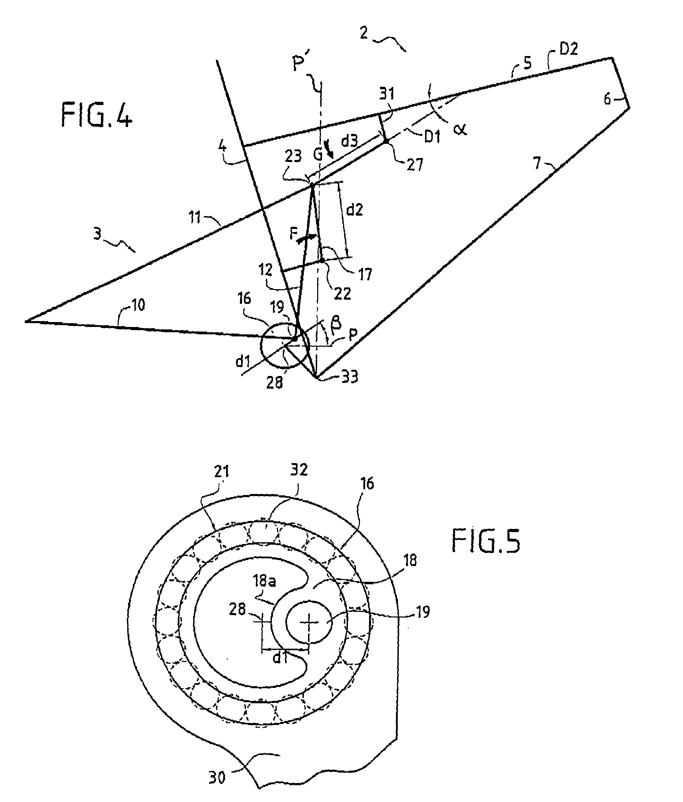

La figure 5 illustre plus précisément cette pièce monobloc de jonction 30, qui présente un évidement cylindrique servant de logement 21 à l'excentrique circulaire 16. Ce dernier est essentiellement constitué du boîtier 18 qui est monté pivotant autour de l'axe 28 de l'excentrique 16 de manière conventionnelle, symbolisée sur la figure 5 par des roulements périphériques 32. Le boîtier 18 a une configuration annulaire avec un décrochement 18a, partiellement évidé pour accueillir l'axe excentré 19. Ledit axe 19 est lui même fixé par une liaison à pivot à l'ensemble arrière 3. Cette configuration annulaire permet un gain de poids par rapport à un boîtier plein.

La bielle 17 relie le châssis avant 2 et l'ensemble arrière 3 par deux liaisons à pivot 22, 23. Plus précisément, la bielle 17 est fixée sur le tube de selle 4 par l'intermédiaire d'une pièce support en U 34, entre les deux montants de laquelle s'étendent la première liaison à pivot 22 et l'extrémité basse 17a de la bielle 17. La seconde liaison à pivot 23 est disposée au niveau des pièces 14 des deux sous-ensembles 3' triangulaires constituant l'ensemble arrière 3, l'extrémité haute 17b de la bielle 17 étant montée entre les deux dites pièces 14 sur la liaison à rotule 23.

Le système amortisseur est constitué par un vérin 24 dont le corps 25 est fixé au châssis avant 2 par une liaison à pivot 27 et dont la tige 26 est fixée à l'ensemble arrière 3 par une autre liaison à pivot. Dans l'exemple illustré, la tige 26 du vérin 24 est fixée à la même liaison à pivot 23 que l'extrémité haute 17b de la bielle avec l'ensemble arrière 3. Comme pour la bielle 17, le corps du vérin 25 est fixé au tube supérieur 5 par une pièce support en U 31 par la liaison à pivot 27.

Dans ce mode de réalisation, le plan de la bielle 17 est légèrement décalé par rapport au plan médian du châssis avant 2.

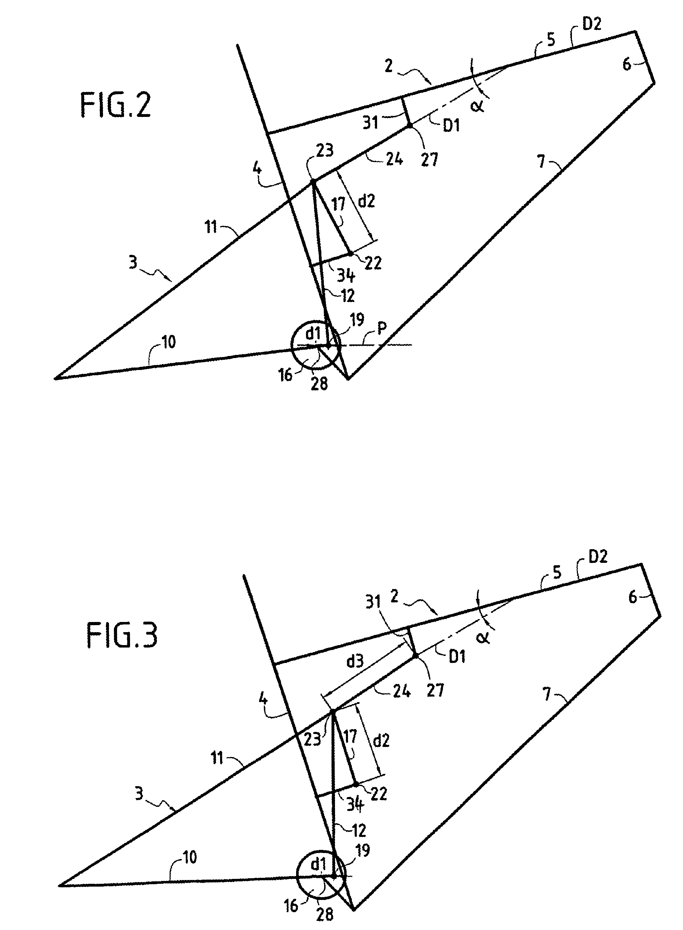

De manière classique, comme dans toute suspension arrière, le débattement de la roue arrière est limité par la course du système amortisseur en l'occurrence du vérin 24. En position statique, c'est-à-dire le VTT étant au repos, sans aucune charge supplémentaire, la tige 26 du vérin a sa longueur sortie maximale. Dans cette disposition, qui est illustrée à la figure 2, la direction d'action D1 de la tige 26 du vérin 24 est sensiblement dans le prolongement des haubans 11 de l'ensemble arrière 3. De plus l'angle α que fait cette direction d'action D1 avec l'axe de symétrie D2 du tube supérieur 5 est inférieur à 30° , étant de préférence de l'ordre de ou inférieur à 20°.

Par ailleurs la direction d'action D1 de la tige 26 du vérin 24 est sensiblement perpendiculaire à l'axe D3 de la bielle 17, c'est-à-dire l'axe passant par les deux liaisons à rotule 22, 23.

Lorsque le VTT est dans son état statique non chargé étant totalement au repos, le plan P passant par l'axe de rotation 28 du boîtier 18 de l'excentrique circulaire 16 et par l'axe excentré 19 est sensiblement dans un plan horizontal, parallèle au plan passant par l'axe des roues avant et arrière du VTT.

L'excentricité, c'est à dire la distance d1 entre l'axe de rotation 28 du boîtier 18 de l'excentrique 16 et l'axe excentré 19 est de préférence comprise entre 15 et 20mm, étant dans un exemple préféré de réalisation de l'ordre de 17mm. Dans ce cas la distance d2 entre les deux liaisons à rotule 22, 23 de la bielle 17 est de l'ordre de 120mm.

Lorsque le VTT est en état statique chargé (figure 3), ne supportant que le poids d'un utilisateur moyen, on a, au niveau du vérin 24, un débattement de l'ordre de 10%. En d'autres termes, la distance d3 entre les deux liaisons à rotule 23, 27 diminue de 10% par rapport à sa valeur dans l'état statique non chargé. Du fait de ce déplacement de la tige 26 dans le corps 25 du vérin 24, on a corrélativement un débattement de l'élément arrière 3 par le double pivotement d'une part de l'axe excentré 19 et d'autre part de la bielle 17, entraînant également une variation de l'angle α. Cette configuration correspond, en pratique, à l'utilisation du VTT sur un terrain plan, sans bosse ni irrégularité, avec un pédalage sans à-coup.

La troisième configuration qui est illustrée à la figure 4 correspond à l'état de débattement maximal, avec la tige 26 qui est repoussée au maximum dans le corps 25 du vérin 24. A titre d'exemple, la course maximale de cette tige 26 peut être de l'ordre de 35 à 40mm. Dans cette configuration, l'axe excentré 19 s'est déplacé autour de l'axe de rotation 28 du boîtier 18 d'une portion angulaire β de l'ordre de 45° par rapport à sa position initiale (figure 2) ; la liaison à rotule 23 sur la pièce 14 s'est écartée du tube de selle 4 par une rotation de la bielle 17, dans le sens de la flèche F, entraînant le vérin 24 à pivoter dans le sens de la flèche G de sorte que l'angle α a légèrement augmenté, tout en restant avec une valeur faible, inférieure à 30°. Cette variation angulaire de l'angle α peut être de l'ordre de 5°. Il convient donc lors de la détermination des conditions structurelles du VTT, de choisir un angle α initial, dans l'état statique non chargé, qui soit de l'ordre de ou inférieur à 25°, pour obtenir l'effet technique recherché à savoir de minimiser les contraintes et les déformations sur le tube supérieur 5 lors de l'amortissement des débattements angulaires de l'ensemble arrière 3 par le vérin 24.

Il serait certes possible de disposer le vérin à un autre emplacement du châssis avant 2, en particulier en le fixant sur le tube diagonal 7. Cependant cette solution ne permet pas de minimiser les contraintes et la déformation du châssis, comme vu ci-dessus. De plus elle présente l'inconvénient de rendre indisponible le tube diagonal pour le placement conventionnel du porte-bidon.

Il serait également possible de fixer le système amortisseur non pas au niveau de la liaison à pivot 23 de la bielle 17 mais à un autre emplacement de l'ensemble arrière 3. Cependant la solution décrite et illustrée permet de réduire le nombre de pivots à réaliser et le nombre d'assemblages et ce faisant d'obtenir un gain de poids appréciable en réduisant au maximum la visserie.

Grâce à la mise en oeuvre de l'excentrique circulaire 16 sur l'axe excentré 19 duquel sont fixés les deux sous-ensembles 3' latéraux de l'ensemble arrière 3, on obtient une structure d'une très grande rigidité, d'autant que l'excentricité d1 de l'excentrique circulaire 16 est relativement faible. Cette rigidité est encore accrue grâce à la présence des tiges de renfort 12, refermant l'ensemble arrière 3.

Lors du débattement de la roue arrière, la direction d'action D1 du vérin 24 est restée sensiblement perpendiculaire à l'axe D3 de la bielle 17 avec un débattement ne dépassant pas ± 30° par rapport à la perpendiculaire à l'axe D3. Les contraintes induites par le vérin 24 sur la bielle 17 sont donc faibles, comparativement à une solution où l'angle entre les deux directions D1, D3 serait faible.

La bielle 17 contribue peu à la rigidité du VTT. Elle se réduit à sa plus simple expression, étant constituée par une simple plaque, destinée à assurer la fonction cinématique de la suspension arrière. Il peut s'agir d'une plaque en aluminium mais pour des raisons de gain de poids voire de marketing il peut s'agir d'une plaque en matériau plus noble, tel que du titane ou du carbone, ce qui -du fait de sa construction particulièrement simple- n'augmente pas sensiblement le coût du VTT.

On a constaté que le rendement optimal du VTT sans effet de pompage, est obtenu avec les dispositions suivantes, prises de préférence en combinaison :
- le plan P passant par l'axe de rotation 28 du boîtier 18 de l'excentrique et l'axe excentré 19 en position statique du VTT, est sensiblement horizontal,
- l'axe de la liaison à pivot 22 de la bielle 17 et du châssis avant 2 est sensiblement dans le plan P' passant par l'axe 33 du pédalier ou légèrement en avant dudit plan P',
- la direction moyenne de la bielle 17 (entre l'état statique non chargé et l'état de débattement maximal) est sensiblement parallèle à l'axe de selle D4.

L'axe de selle D4 correspond à la direction générale du tube de selle 4, sachant que le châssis avant 2 peut avoir une structure non conventionnelle sans tube de selle proprement dit, c'est à dire sans un tube reliant complètement la tige de selle et le boîtier du pédalier.

## Revendications

1. Véhicule à deux roues, notamment bicyclette ou VTT, équipé d'une suspension arrière, comportant un châssis avant (2), portant un boîtier de pédalier (8), et un ensemble arrière oscillant (3), portant une roue arrière motrice, ledit châssis (2) et ledit ensemble arrière (3) étant solidaires l'un de l'autre par deux liaisons pivotantes et par un système amortisseur, **caractérisé en ce que** la première liaison pivotante est formée par un excentrique circulaire (16) constitué dans un boîtier (18) portant un axe excentré (19), ledit boîtier (18) étant monté pivotant dans un logement (9) sur le châssis avant (2), tandis que l'ensemble arrière (3) est fixé sur l'axe excentré (19) de part et d'autre du boîtier (18), et **en ce que** la seconde liaison pivotante est formée par une bielle (17) constituée par une simple plaque disposée dans le plan médian du châssis ou parallèlement à celui-ci.

2. Véhicule selon la revendication 1 **caractérisé en ce que** l'excentrique circulaire présente une excentricité (d1) de l'ordre de 15 à 20mm.

3. Véhicule selon l'une des revendications 1 et 2 **caractérisé en ce que** la longueur (d2) de la bielle entre ses deux pivots (22, 23) est de l'ordre de 80 à 150mm.

4. Véhicule selon l'une des revendications 1 à 3 **caractérisé en ce que** l'excentrique circulaire (16) est logé, dans le châssis avant (2), à proximité, notamment au-dessus et en arrière, du boîtier de pédalier (8).

5. Véhicule selon l'une des revendications 1 à 4 **caractérisé en ce que** la partie du châssis avant (2) qui est destinée à accueillir le boîtier de pédalier (8) et l'excentrique circulaire (16) est une pièce monobloc de jonction (30) obtenue, à l'état brut, par forgeage, moulage ou extrusion.

6. Véhicule selon l'une des revendications 1 à 5 **caractérisé en ce que** la direction d'action (D₁) du système amortisseur (24) fait un angle α faible avec la portion du châssis (2) sur laquelle ledit système est fixé, α étant inférieur à 30° et plutôt de l'ordre de 20°.

7. Véhicule selon l'une des revendications 1 à 6 **caractérisé en ce que** le système amortisseur (24), l'ensemble arrière oscillant (3) et la plaque formant bielle (17) sont solidarisés les uns aux autres selon un même axe de pivotement (23).

8. Véhicule selon l'une des revendications 1 à 7 **caractérisé en ce que** la direction d'action (D₁) du système amortisseur (24) est sensiblement dans le prolongement d'une portion rectiligne (11) de l'ensemble arrière oscillant (3) dont une première extrémité (11b) est fixée audit système amortisseur (24) et dont la seconde extrémité (11a) porte la roue arrière.

9. Véhicule selon l'une des revendications 1 à 8 **caractérisé en ce que** l'ensemble arrière oscillant (3) a une configuration sensiblement triangulaire formée par une tige de base (10) entre l'axe excentré (19) porté par le boîtier (18) de l'excentrique (16) et la roue arrière, un hauban (11) entre la roue arrière et un pivot (23) de la bielle (17) et une tige de renfort (12) entre ledit pivot (23) de la bielle (17) et ledit axe excentré (19).

10. Véhicule selon l'un des revendications 1 à 9, dans lequel un premier plan (P) passe par l'axe de rotation (28) du boîtier (18) de l'excentrique et l'axe excentré (19) et un plan (P') vertical passe par l'axe (33) du pédalier, **caractérisé par** les dispositions suivantes, prises de préférence en combinaison :
- en position statique du VTT, ledit premier plan P est sensiblement horizontal,
- l'axe de la liaison à pivot (22) de la bielle (17) et du châssis avant (2) est sensiblement dans le second plan P' ou légèrement en avant de celui-ci,
- la direction moyenne de la bielle (17), entre l'état statique non chargé et l'état de débattement maximal, est sensiblement parallèle à l'axe de selle (D4).

## Claims

1. A two-wheeled vehicle, in particular a bicycle or a mountain bike, the vehicle being fitted with a rear suspension and comprising a front frame (2) carrying a bottom bracket (8) and an oscillating rear assembly (3) carrying a driving rear wheel, said frame (2) and said rear assembly (3) being connected to each other via two pivot connections and via a damping system, the vehicle being **characterized in that** the first pivot connection is formed by a circular eccentric (16) constituted in a casing (18) carrying an eccentric axis (19), said casing (18) being mounted to pivot in a housing (9) in the front frame (2), while the rear assembly (3) is fixed to the eccentric axis (19) on either side of the casing (18), and **in that** the second pivot connection is formed by a connecting rod (17) constituted by a simple plate disposed in the median plane of the frame (2) or parallel thereto.

2. A vehicle according to claim 1, **characterized in that** the circular eccentric presents eccentricity (d1) of about 15 mm to 20 mm.

3. A vehicle according to claim 1 or claim 2, **characterized in that** the length (d2) of the connecting rod between its two pivots (22, 23) is about 80 mm to 150 mm.

4. A vehicle according to any one of claims 1 to 3, **characterized in that** the circular eccentric (16) is housed in the front frame (2) close to the bottom bracket (8), and in particular above it and behind it.

5. A vehicle according to any one of claims 1 to 4, **characterized in that** the portion of the front frame (2) for receiving the bottom bracket (8) and the circular eccentric (16) is a unitary junction piece (30) which is obtained in the unfinished state by forging, molding, or extrusion.

6. A vehicle according to any one of claims 1 to 5, **characterized in that** the direction (D1) in which the damping system (24) acts makes a small angle α with the portion of the frame (2) to which said system is fixed, where α is preferably less than 30°, and better about 20°.

7. A vehicle according to any one of claims 1 to 6, **characterized in that** the damper system (24), the oscillating rear assembly (3), and the plate forming the connecting rod (17) are secured to one another about a common pivot axis (23).

8. A vehicle according to any one of claims 1 to 7, **characterized in that** the direction (D1) in which the damping system (24) acts is substantially in line with a rectilinear portion (11) of the oscillating rear assembly (3) having a first end (11b) fixed to said damping system (24) and a second end (11a) carrying the rear wheel.

9. A Vehicle according to any one of claims 1 to 8, **characterized in that** the oscillating rear assembly (3) is of a configuration that is substantially triangular, being formed by a chain-stay rod (10) between the eccentric pin (19) carried by the casing (18) of the eccentric (16) and the rear wheel, a seat stay (11) between the rear wheel and a pivot (23) of the connecting rod (17), and a reinforcing rod (12) between said pivot (23) of the connecting rod (17) and said eccentric axis (19).

10. A vehicle according to any one of claims 1 to 9, in which a first plane (P) contains the axis of rotation (28) of the casing (18) of the eccentric and the eccentric axis (19) and a second plane (P') vertical contains the bottom bracket axis (33), the vehicle being **characterized by** the following dispositions, preferably taken in combination :
- when the bike is in its static position, said first plane (P) is substantially horizontal;
- the axis of the pivot connection (22) between the connecting rod (17) and the front frame (2) lies substantially in the second plane P' or slightly in front of said plane P' ;
- the mean direction of the connecting rod (17) between the unloaded static state and the maximally loaded state is substantially parallel to the seat axis (D4).

## Patentansprüche

1. Zweirädriges Fahrzeug, insbesondere Fahrrad oder MTB, das mit einer hinteren Federung ausgestattet ist, umfassend einen Vorderrahmen (2), der ein Tretlagergehäuse (8) trägt, und eine hintere Schwenkeinheit (3), die ein hinteres Antriebsrad trägt, wobei der Rahmen (2) und die hintere Einheit (3) durch zwei Schwenkverbindungen und durch ein Dämpfungssystem fest miteinander verbunden sind, **dadurch gekennzeichnet, daß** die erste Schwenkverbindung von einem Kreisexzenter (16) gebildet ist, der aus einem eine exzentrische Achse (19) tragenden Gehäuse (18) besteht, wobei das Gehäuse (18) in einer Aufnahme (9) an dem Vorderrahmen (2) schwenkbar angebracht ist, während die hintere Einheit (3) an der exzentrischen Achse (19) auf beiden Seiten des Gehäuses (18) befestigt ist, und daß die zweite Schwenkverbindung von einer Stange (17) gebildet ist, die aus einer einfachen Platte besteht, welche in der Mittelebene des Rahmens oder parallel hierzu angeordnet ist.

2. Fahrzeug nach Anspruch 1, **dadurch gekennzeichnet, daß** der Kreisexzenter eine Exzentrizität (d1) in der Größenordnung von 15 bis 20 mm aufweist.

3. Fahrzeug nach einem der Ansprüche 1 und 2, **dadurch gekennzeichnet, daß** die Länge (d2) der Stange zwischen ihren beiden Schwenkachsen (22, 23) in der Größenordnung von 80 bis 150 mm liegt.

4. Fahrzeug nach einem der Ansprüche 1 bis 3, **dadurch gekennzeichnet, daß** der Kreisexzenter (16) in dem Vorderrahmen (2) in der Nähe, insbesondere oberhalb des und hinter dem Tretlagergehäuse(s) (8) gelagert ist.

5. Fahrzeug nach einem der Ansprüche 1 bis 4, **dadurch gekennzeichnet, daß** der Teil des Vorderrahmens (2), der dazu bestimmt ist, das Tretlagergehäuse (8) und den Kreisexzenter (16) aufzunehmen, ein einstückiges Verbindungsteil (30) ist, das im Rohzustand durch Schmieden, Formen oder Extrudieren erhalten wird.

6. Fahrzeug nach einem der Ansprüche 1 bis 5, **dadurch gekennzeichnet, daß** die Wirkrichtung (D₁) des Dämpfungssystems (24) mit dem Abschnitt des Rahmens (2), an dem das System befestigt ist, einen kleinen Winkel α einschließt, wobei α kleiner als 30° ist und eher in der Größenordnung von 20° liegt.

7. Fahrzeug nach einem der Ansprüche 1 bis 6, **dadurch gekennzeichnet, daß** das Dämpfungssystem (24), die hintere Schwenkeinheit (3) und die die Stange (17) bildende Platte an einer gleichen Schwenkachse (23) fest miteinander verbunden sind.

8. Fahrzeug nach einem der Ansprüche 1 bis 7, **dadurch gekennzeichnet, daß** die Wirkrichtung (D₁) des Dämpfungssystems (24) im wesentlichen in der Verlängerung eines geradlinigen Abschnitts (11) der hinteren Schwenkeinheit (3) liegt, von dem ein erstes Ende (11 b) an dem Dämpfungssystem (24) befestigt ist und dessen zweites Ende (11a) das Hinterrad trägt.

9. Fahrzeug nach einem der Ansprüche 1 bis 8, **dadurch gekennzeichnet, daß** die hintere Schwenkeinheit (3) eine im wesentlichen dreieckige Gestalt aufweist, die von einer Grundstange (10) zwischen der von dem Gehäuse (18) des Exzenters (16) getragenen exzentrischen Achse (19) und dem Hinterrad, einer Strebe (11) zwischen dem Hinterrad und einer Schwenkachse (23) der Stange (17) und einer Versteifungsstange (12) zwischen der Schwenkachse (23) der Stange (17) und der exzentrischen Achse (19) gebildet ist.

10. Fahrzeug nach einem der Ansprüche 1 bis 9, wobei eine erste Ebene (P) durch die Drehachse (28) des Gehäuses (18) des Exzenters und die exzentrische Achse (19) verläuft und eine zweite vertikale Ebene (P') durch die Achse (33) des Tretlagers verläuft, **gekennzeichnet durch** die folgenden Anordnungen, vorzugsweise in Kombination miteinander:
- in der statischen Position des MTB ist die erste Ebene P im wesentlichen horizontal,
- die Achse der Schwenkachsenverbindung (22) der Stange (17) und des Vorderrahmens (2) liegt im wesentlichen in der zweiten Ebene P' oder geringfügig vor dieser,
- die mittlere Richtung der Stange (17), zwischen dem unbelasteten statischen Zustand und dem Zustand maximaler Ausfederung, verläuft im wesentlichen parallel zur Sattelachse (D4).
